(19) **Europäisches Patentamt**

**European Patent Office**

**Office européen des brevets**

(11) Veröffentlichungsnummer: **0 041 608**
**B1**

(12) **EUROPÄISCHE PATENTSCHRIFT**

(45) Veröffentlichungstag der Patentschrift:
10.04.85

(21) Anmeldenummer: 81103125.1

(22) Anmeldetag: 25.04.81

(51) Int. Cl.⁴: **G 01 N 30/02,** G 01 N 30/60

(54) Trennsäule für die Flüssigkeitschromatographie.

(30) Priorität: 06.06.80 DE 3021366

(43) Veröffentlichungstag der Anmeldung:
16.12.81 Patentblatt 81/50

(45) Bekanntmachung des Hinweises auf die Patenterteilung:
10.04.85 Patentblatt 85/15

(84) Benannte Vertragsstaaten:
AT BE CH DE FR GB IT LI NL SE

(56) Entgegenhaltungen:
DE - A - 1 598 206
DE - A - 2 655 650
DE - B - 1 278 401
DE - U - 8 013 360

(73) Patentinhaber: **Merck Patent Gesellschaft mit beschränkter Haftung, Frankfurter Strasse 250, D-6100 Darmstadt (DE)**

(72) Erfinder: **Gunkel, Werner, Wingertsweg 33, D-6101 Rossdorf 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Trennsäule für die Flüssigkeitschromatographie. In der Regel werden Trennsäulen für die Flüssigkeitschromatographie, insbesondere solche mit kleineren Durchmessern, nach dem Packen mit Fritten fest verschlossen, wobei ein möglichst geringes Totvolumen verbleiben soll. Bei chromatographischen Trennsäulen mit grösseren Durchmessern ist es jedoch bisher nicht möglich, die Füllung so vorzunehmen, dass eine völlig volumenkonstante Packung resultiert. Vielmehr wird die Packung beim Durchpumpen von Elutionsmittel je nach Art des Füllmaterials und der Füllmethode in der Regel um etwa 0,5–2% der Säulenlänge komprimiert.

Unabhängig von der Säulendimension tritt jedoch insbesondere bei Verwendung polarer Lösungsmittel infolge der zwar geringen, aber im Dauerbetrieb doch merklichen Löslichkeit der Sorbentien im Eluens ein Schwinden der Packung auf. Alle diese Effekte führen bei beidseitig an den Stirnseiten durch Fritten fest verschlossenen Säulen zu einer Zunahme des Totvolumens zwischen Packung und Fritte, wodurch die Trennleistung sinkt und es beim in der Praxis kaum vermeidbaren Austrocknen der Säule in Verbindung mit Erschütterungen zu Rissbildung und damit zur totalen Zerstörung der Packung kommen kann.

Es wurde in der DE-OS 1 598 206 und der DE-PS 1 278 401 bereits vorgeschlagen, zur Vermeidung eines Totvolumens das Säulenende durch höhenverstellbare Stopfen zu verschliessen. Dabei ist jedoch insbesondere bei Säulen grösserer Durchmesser die Abdichtung der Stopfen am Säulenumfang problematisch, da Säulen mit sehr engen Durchmessertoleranzen benötigt werden. Vor allem dann, wenn auf Grund der guten Chemikalienbeständigkeit Säulen aus Glas und Stopfen mit Polytetrafluorethylendichtungen erforderlich sind ist dieser Vorschlag wegen der Bruchgefahr in der Praxis nicht realisierbar.

Aus der DOS 2 655 650 sind Säulen bekannt, bei denen durch radiale Kompression der Säule ein Totvolumen in der Säulenfüllung verhindert werden soll. Dazu muss jedoch die Säule selbst aus einem elastischen Material bestehen. Für herkömmliche Säulen aus Metall, Glas oder druckstabilem Kunststoff ist dieser Vorschlag daher nicht anwendbar.

Es bestand also die Aufgabe, eine Trennsäule zu finden, bei der der Volumenschwund der Packung ausgeglichen werden kann, ohne dass dafür spezielle Säulenmaterialien verwendet werden müssen oder die Säulen einer besonders massgenauen, aufwendigen Fertigung unterworfen werden müssen. Diese Aufgabe wurde durch die vorliegende Erfindung so gelöst, dass die Säulenfüllung durch ständiges gleichmässiges Aufpressen eines Kolbens stabilisiert wird, wobei die Abdichtung der Trennsäule an der oberen Stirnseite durch eine flexible Membran erfolgt.

Gegenstand der Erfindung ist demgemäss eine Trennsäule für die Flüssigkeitschromatographie, bei der die Säulenfüllung 2 durch einen Kolben 8 in Längsrichtung komprimierbar und kolbenseitig durch eine flexible Membran abgedichtet ist, die dadurch gekennzeichnet ist, dass die flexible Membran 5 an der Stirnseite der Trennsäule 1 durch einen Befestigungsring 13 fixiert ist.

Der Vorteil der erfindungsgemässen Trennsäule besteht darin, dass durch ständiges gleichmässiges Aufpressen eines Kolbens auf die Sorbensoberfläche die Packung stabilisiert wird und sich auch bei langem Gebrauch der Säule keine Totvolumina bilden können.

Besonders vorteilhaft ist dabei, dass durch die erfindungsgemässe Verwendung einer flexiblen Membran, die die Abdichtung der Stirnfläche der Trennsäule übernimmt alle herkömmlichen Säulenarten ohne besonders eng tolerierte Innendurchmesser anwendbar sind. Der Kolben, der nur noch zur Druckübertragung benötigt wird, aber keine Dichtfunktionen übernimmt, kann daher mit grösseren Toleranzen dem Säulendurchmesser angepasst werden. Durch die flexible Membran ist insbesondere auch die Abdichtung bei grösseren Säulendurchmessern und höheren Drücken unproblematisch.

In den Zeichnungen ist eine bevorzugte Ausgestaltung der erfindungsgemässen Trennsäule dargestellt.

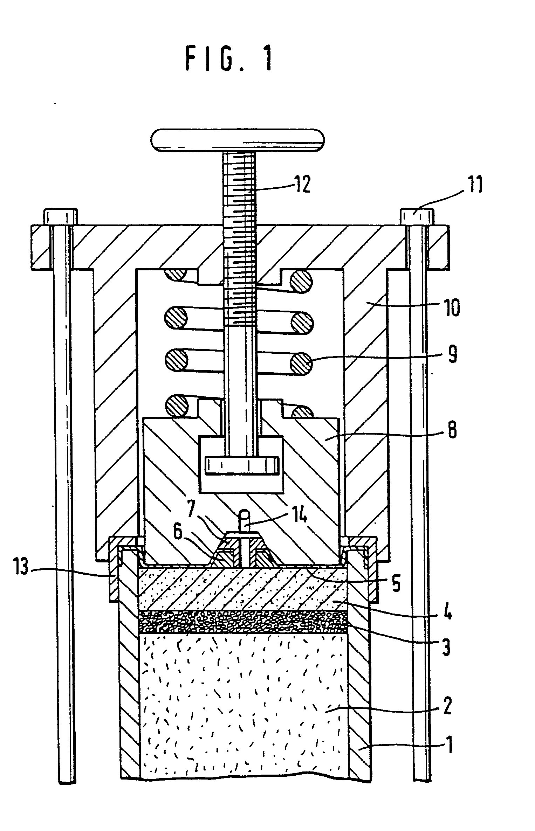

Figur 1 zeigt einen Schnitt durch den Säulenkopf mit einem Teil der Einspannvorrichtung.

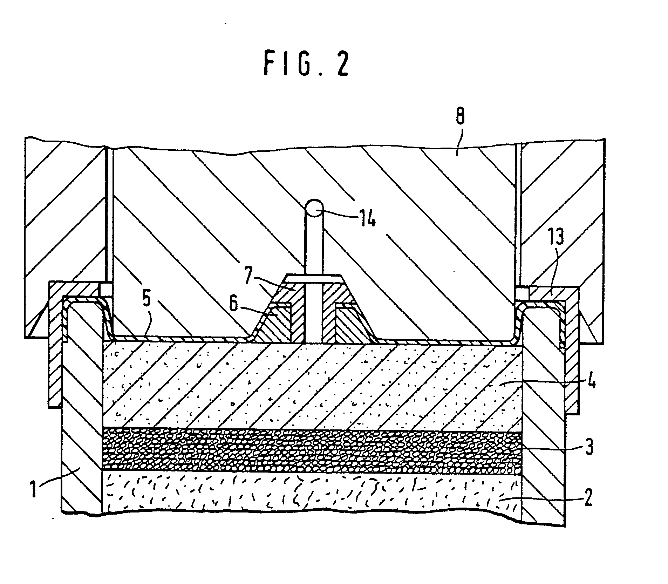

Figur 2 zeigt den Säulenkopf in vergrösserter Darstellung.

Mit 1 ist die Trennsäule bezeichnet, mit 2 die darin befindliche Säulenfüllung. 3 ist eine Kugelschüttung und 4 eine Fritte. 5 ist die flexible Membran, 6 und 7 der zweiteilige Ausschlusskegel der Membran an den Kolben, 8 der Kolben und 9 eine Druckfeder. 10 ist der obere Flansch der Einspannvorrichtung für die Säule, der durch die Spannschrauben 11 gehalten wird. 12 ist eine Gewindespindel zum Abheben des Kolbens von der Säule. Mit 13 ist der Befestigungsring für die Membran auf der Säule und mit 14 der Zuführkanal für das Eluens bezeichnet.

Als Trennsäulen können alle gebräuchlichen Trennsäulen verwendet werden, z.B. solche aus Stahl, Glas oder Kunststoff. Die Auswahl des Materials richtet sich dabei insbesondere danach, welchen Belastungen, z.B. durch Überdruck, die Säule standhalten muss. Die Erfindung wird vorzugsweise bei präparativen Säulen, z.B. solchen von etwa 50–500 mm Durchmesser und darüber, verwendet. Die Erfindung ist jedoch nicht auf Säulen dieses Durchmessers beschränkt, sondern kann bei allen technisch realisierbaren Säulendurchmessern mit Vorteil angewendet werden. Insbesondere können Trennsäulen für die industrielle Produktion, die u.U. sehr grosse Durchmesser haben und deren Packungsstabilität sehr viel problematischer ist als die von analytischen Säulen, sehr vorteilhaft nach der vorliegenden Erfindung hergestellt werden. Um eine sichere Funktion zu gewährleisten, sollte lediglich der Säulendurchmesser mehr als etwa $1/_{10}$ der Säulenlänge betragen.

Die erfindungsgemässen Trennsäulen können mit allen üblichen Sorbentien wie z.B. Kieselgel, Kieselgur oder Aluminiumoxid gefüllt werden. Nach dem Füllen der Säule bringt man eine dünne, z.B. etwa 5–10 mm starke Schicht einer Kugelschüttung 3 aus einem inerten Material, vorzugsweise aus Glas, auf. Diese Kugelschüttung 3 hat insbesondere die Aufgabe, den durch den Kolben 8 ausgeübten Druck gleichmässig zu verteilen. Die Kugelschüttung 3 wird durch eine Fritte 4 aus einem porösen, inerten Material, vorzugsweise aus einem porösen Keramikmaterial, abgedeckt. Die Fritte 4 hat die Aufgabe, für eine gleichmässige Verteilung der durch den Zuführkanal 14 aufgebrachten Substanzen über die Sorbensoberfläche zu sorgen. Zu diesem Zweck können an der Oberfläche der Fritte 4 noch Verteilerkanäle angebracht sein. Die Trennsäule 1 sollte möglichst soweit gefüllt werden, dass die Oberseite der Fritte 4 etwa mit der Stirnfläche der Trennsäule 1 abschliesst.

Auf die gefüllte Trennsäule 1 wird dann die flexible Membran 5 mit dem zweiteiligen Anschlusskegel 6, 7 aufgelegt und mit dem Befestigungsring 13 fixiert. Nach dem Einsetzen der Säule in die Einspannvorrichtung wird mit Hilfe der Spannschrauben 11 der obere Flansch 10 angepresst. Dadurch wird die flexible Membran 5 sicher auf der Stirnseite der Trennsäule 1 festgehalten und die Säule gleichzeitig abgedichtet.

Die flexible Membran 5, die die Aufgabe hat, eine sichere Abdichtung des Säulenkopfes gegen die durch die Kapillare 14 aufgebrachten Substanzgemische und Eluentien zu gewährleisten, muss in der Lage sein, diese Aufgabe auch bei stärkerer Verformung, z.B. längs eines Kolbenweges von bis zu etwa 15 mm, voll zu erfüllen. Als Materialien für diese Membran geeignet sind daher z.B. Silicongummi- oder Butylkautschuk-Membranen. Wegen der sehr guten Lösungsmittelbeständigkeit bei gleichzeitig guter Verformbarkeit wird jedoch insbesondere Polytetrafluorethylen als Material bevorzugt.

Um einen beim Gebrauch der Säule auftretenden Volumenschwund der Säulenfüllung 2 auszugleichen, muss lediglich der Kolben 8 mit einer geeigneten Vorrichtung nachgeschoben werden, wobei sich die flexible Membran 5, wie in den Zeichnungen dargestellt, verformt. Besonders vorteilhaft ist es wenn der Kolben 8 ständig mit einer vorgegebenen Kraft auf die Sorbensoberfläche gepresst wird. Dies kann vorzugsweise dadurch erreicht werden, dass eine Druckfeder 9 vorgesehen ist, die zwischen dem Flansch 10 und dem Kolben 8 angebracht ist. Mit Hilfe der Gewindespindel 12 kann der Kolben 8 gegen den Druck der Feder 9 von der Säule abgehoben werden, was z.B. beim Zusammenbau oder Abbau der Trennsäule notwendig ist.

Die vorliegende Erfindung betrifft Neuerungen an der Ausführung des Säulenkopfes. Die übrigen Teile der erfindungsgemässen Trennsäule, die hier nicht beschrieben sind, entsprechen den üblichen Ausführungsformen, die dem Fachmann geläufig sind.

Durch die Erfindung stehen daher Trennsäulen zur Verfügung, die aufgrund der Totvolumen-freien komprimierten Packungen optimale Trennungen über einen langen Zeitraum ermöglichen.

**Patentansprüche**

1. Trennsäule für die Flüssigkeitschromatographie, bei der die Säulenfüllung (2) durch einen Kolben (8) in Längsrichtung komprimierbar und kolbenseitig durch eine flexible Membran abgedichtet ist, dadurch gekennzeichnet, dass die flexible Membran (5) an der Stirnseite der Trennsäule (1) durch einen Befestigungsring (13) fixiert ist.

2. Trennsäule nach Anspruch 1, dadurch gekennzeichnet, dass die flexible Membran (5) aus Polytetrafluorethylen besteht.

3. Trennsäule nach Anspruch 1 oder 2, dadurch gekennzeichnet, dass zum Aufdrücken des Kolbens (8) eine Druckfeder (9) vorgesehen ist.

4. Trennsäule nach einem der Ansprüche 1 bis 3, dadurch gekennzeichnet, dass auf der Säulenfüllung (2) eine Schüttung (3) aus kugelförmigem inertem Material und eine poröse Fritte (4) aufgebracht ist.

**Claims**

1. Separation column for liquid chromatography, the column packing (2) of which can be compressed in the longitudinal direction by means of a piston (8), and which is sealed on the piston side by a flexible diaphragm (5), characterised in that the flexible diaphragm is fixed by a ring (13) at the front side of the column (1).

2. Separation column according to Claim 1, characterised in that the flexible diaphragm (5) consists of polytetrafluoroethylene.

3. Separation column according to Claim 1 or 2, characterised in that a compression spring (9) is provided for applying the pressure of the piston (8).

4. Separation column according to one of Claims 1 to 3, characterised in that a loose layer (3) of an inert material in the form of spheres and a porous frit (4) are provided on top of the column packing (2).

**Revendications**

1. Colonne de séparation pour la chromatographie liquide, colonne dans laquelle la charge (2) peut être comprimée dans le sens longitudinal par un piston (8), tandis qu'elle est étanchée, côté piston, par une membrane flexible, caractérisée en ce que la membrane flexible (5) est fixée sur la face frontale de la colonne de séparation (1) par un anneau de fixation (13).

2. Colonne de séparation suivant la revendication 1, caractérisée en ce que la membrane flexible (5) est réalisée en polytétrafluoréthylène.

3. Colonne de séparation suivant la revendication 1 ou 2, caractérisée en ce que, pour presser le piston (8), on prévoit un ressort à pression (9).

4. Colonne de séparation suivant une des revendications 1 à 3, caractérisée en ce que, sur la charge (2) de la colonne, on applique une charge (3) d'une matière inerte sous forme de billes, ainsi qu'une fritte poreuse (4).

# FIG. 1

# FIG. 2